# EUROPÄISCHE PATENTANMELDUNG

(11) **EP 1 134 133 A2**
(43) Veröffentlichungstag der Anmeldung: **19.09.2001**
(21) Anmeldenummer: 00128392.8
(22) Anmeldetag: 22.12.2000
(51) Int. Cl.: B60R 25/00, E05B 49/00

(54) **System zur Aktiverung und/oder Deaktivierung einer Sicherheitseinrichtung in einem Kraftfahrzeug**

(30) Priorität: 15.03.2000 DE 10012698
(71) Anmelder: Mannesmann VDO Aktiengesellschaft, 60388 Frankfurt am Main (DE)
(72) Erfinder: Brüssow, René, 35102 Lohra/ Altenvers (DE)
(74) Vertreter: Rassler, Andrea, Dipl.-Phys.

(57) **Zusammenfassung**

Die Erfindung betrifft ein System zur Aktivierung und/oder Deaktivierung einer Sicherheitseinrichtung, insbesondere einer Diebstahlschutzeinrichtung eines Kraftfahrzeuges, bei welchem zwischen einem tragbaren Sender (1) und einem Empfänger (2) eine codierte Information drahtlos übertragen wird, wobei der Empfänger die empfangene Information mit einer vorgegebenen codierten Information vergleicht und bei Übereinstimmung dieser codierten Information ein Ansteuersignal an die Sicherheitseinrichtung abgibt.

Bei einer Vorrichtung, bei welcher trotz berührungsloser Abfrage des Identifikationsgebers eine berechtigte Zugangsinformation von einem dritten nicht erlangt werden kann, ist der Empfänger (2) mit einer Spracherkennungseinrichtung (16) verbunden, die eine eingegebene Sprachcodierung mit einer vorgegebenen Sprachcodierung vergleicht und bei Übereinstimmung ein Freigabesignal an den Empfänger (2) sendet, welcher dann das Ansteuersignal an die Sicherheitseinrichtung ausgibt.

## Beschreibung

Die Erfindung betrifft ein System zur Aktivierung und/oder Deaktivierung einer Sicherheitseinrichtung, insbesondere eine Diebhstahlschutzeinrichtung eines Kraftfahrzeuges, bei welchem zwischen einem tragbaren Sender und einem Empfänger eine codierte Information drahtlos übertragen wird, wobei der Empfänger die empfangene Information mit einer vorgegebenen codierten Information vergleicht und bei Übereinstimmung dieser codierten Informationen ein Ansteuersignal an die Sicherheitseinrichtung abgibt.

Aus der gattungsgemäßen WO 92/18732 ist eine Vorrichtung zum Betreiben einer Türverriegelungs- und/oder Alarmanlage bekannt, bei welcher vom Nutzer ein beweglicher Sender getragen wird, in dem eine codierte Information zur Aktivierung bzw. Deaktivierung einer Sicherheitseinrichtung abgelegt ist. Im Kraftfahrzeug ist eine Empfängereinrichtung angeordnet, welche das vom Sender drahtlos ausgesandte Hochfrequenzsignal empfängt und mit einer in ihm abgespeicherten Sollcodierung vergleicht. Bei Übereinstimmung dieser Information wird ein Signal an die Türverriegelungs- und/oder Alarmanlage ausgegeben.

Das Sendersignal wird nur dann ausgegeben, wenn die den Sender tragende Person in einem vorgegebenen Abstand vom Kraftfahrzeug steht, welcher innerhalb der Reichweite des Senders liegt.

Der Sender wird dabei durch ein Signal des Empfängers ohne manuelles Eingreifen des Nutzers aktiviert. Bei der verwendeten hochfrequenten Funkverbindung ist die Information auf eine Trägerfrequenz aufmoduliert, welche im Megaherz- oder Gigaherzbereich liegt.

Die fortgeschrittenen Telekommunikationsmöglichkeiten machen es aber möglich, unbemerkt vom Fahrzeugbesitzer auch über größere Strecken den Identifikationscode berührungslos abzufragen und an das Fahrzeug zu übertragen, ohne dass der Fahrzeugbesitzer etwas davon merkt.

Der Erfindung liegt somit die Aufgabe zugrunde, eine Vorrichtung anzugeben, bei welcher trotz berührungsloser Abfrage des Identifikationsgebers eine berechtigte Zugangsinformation von einem Dritten nicht erlangt werden kann.

Erfindungsgemäß wird die Aufgabe dadurch gelöst, dass der Empfänger mit einer Spracherkennungseinrichtung verbunden ist, die eine eingegebene Sprachcodierung mit einer vorgegebenen Sprachcodierung vergleicht und bei Übereinstimmung ein Freigabesignal an den Empfänger sendet, woraufhin dieser das Ansteuersignal an die Sicherheitseinrichtung abgibt.

Der Vorteil der Erfindung besteht darin, dass eine hohe Betriebssicherheit gegenüber Manipulation durch Dritte erreicht ist. Insbesondere wird der Missbrauch durch eine Relaisstreckenverlängerung (Relais- Attack) vorteilhaft verhindert. Durch die zusätzliche Identifizierung über eine Spracheingabe, die auf den Nahbereich des Nutzers zum Kraftfahrzeug beschränkt ist, wird ein zusätzlicher Schutz des Fahrzeuges gegenüber Diebstahl gewährleistet.

Vorteilhafterweise sendet die Spracherkennungseinrichtung nach Betätigung eines Bedienelementes des Kraftfahrzeuges eine Aufforderung zur Eingabe der Sprachcodierung aus. Somit wird auch der berechtigte Nutzer darauf hingewiesen, dass eine zusätzliche Identifizierung notwendig ist. Das Bedienelement kann dabei sehr vielfältig gestaltet sein. Vorteilhafterweise werden aber schon an sich im Fahrzeug vorhandene Bedienelemente genutzt. Beispielsweise kann das Aufforderungssignal durch Betätigung des Türgriffes ausgelöst werden. Bei der Verwendung in Fahrberechtigungssystemen kann das Einführen des Zündschlüssels oder die Betätigung eines Startknopfes die Identifizierungsaufforderung auslösen.

In einer Weiterbildung ist die Spracherkennungseinrichtung eine an sich im Kraftfahrzeug vorhandene sprachgesteuerte Freisprecheinrichtung.

Um sicherzustellen, dass auch verschiedene berechtigte Nutzer das Kraftfahrzeug fahren können, speichert die Spracherkennungseinrichtung für jeden berechtigten Nutzer eine vorgegebene Sprachcodierung.

Je nach verwendeten Spracherkennungssystem ist es bei besonders komfortablen Systemen möglich, dass die Stimme als solche erkannt wird, bei einfacheren Systemen reicht die Erkennung verschiedener einzelner Wörter aus.

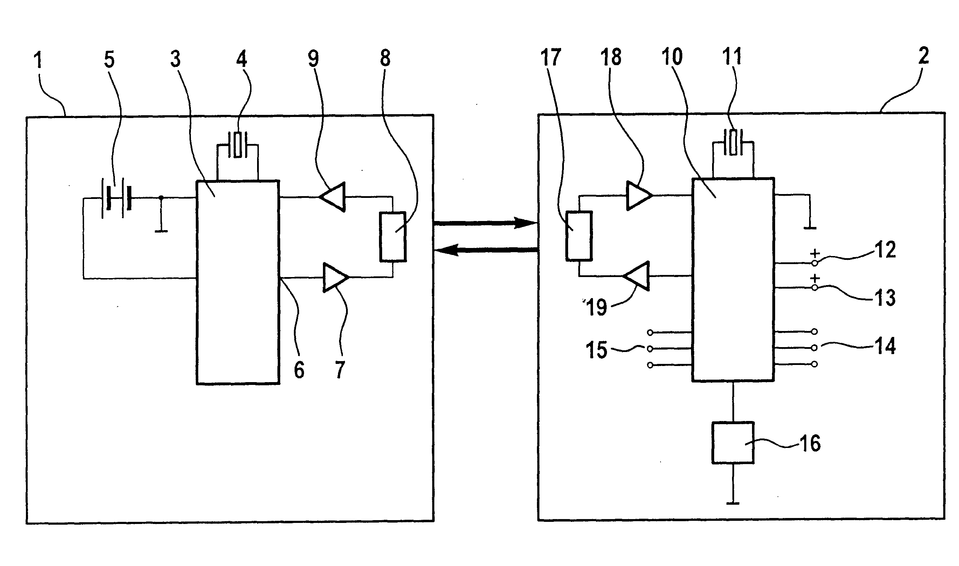

Die Erfindung lässt zahlreiche Ausführungsformen zu. Eine davon soll anhand der in der Zeichnung dargestellten Figur näher erläutert werden.

Bei den heute in der Entwicklung befindlichen Fahrzeugzugangs- und Fahrberechtigungssystemen wird durch eine berührungslose Abfrage eines Identifikationsgebers das Öffnen und das Starten eines Fahrzeuges wesentlich komfortabler gestaltet. Der Identifikationsgeber kann dabei beliebig am Körper, z. B. in einer Hosentasche oder einer Manteltasche getragen werden und muss nicht explizit betätigt werden.

Eine solche Sicherheitseinrichtung besteht aus einem tragbaren Sender 1 und einer Empfängervorrichtung 2. Die tragbare Sendeeinheit 1 umfasst einen Mikrocomputer 3, welchem ein Schwingquarz 4 zur Takterzeugung zugeordnet ist. Zur Stromversorgung dient eine Batterie 5, welche zur Erzielung einer geringen Baugröße der Vorrichtung als Knopfzelle ausgebildet ist. Der Ausgang 6 des Mikroprozessors 3 führt zur Aussendung von Funksignalen über einen Verstärker 7 zu einer Antenne 8. Zum Empfang von Funksignalen ist die Antenne 8 über einen weiteren Verstärker 9 mit dem Mikroprozessor 3 verbunden.

Die Empfängereinrichtung 2 weist ebenfalls einen Mikrorechner 10 mit einem Schwingquarz 11 auf. Über den Anschluss 12 ist der Mikrorechner 10 an die Stromquelle des Kraftfahrzeuges (Klemme 30) angeschlossen. Der Anschluss 13 ist mit dem Zündschalter (Klemme 15) des Kraftfahrzeuges verbunden, sodass bei jedem Startvorgang eine Ansteuerung des Mikrocomputers 10 erfolgt. Die Eingänge 14 des Mikrocomputers 10 sind jeweils einer in einer Tür des Kraftfahrzeugs angeordneten Schließvorrichtung zugeordnet und können durch mechanische Betätigung mittels eines Schlüssels zu einer Ansteuerung des Mikrocomputers 10 genutzt werden, wenn die normale Funktion der Schließvorrichtung gestört ist. Jeder der Anschlüsse 15 des Mikrocomputers 10 führt zu der Schließvorrichtung der Zentralverriegelung des Kraftfahrzeuges, über welche ein vom Mikrocomputers 10 abgegebenes Ansteuersignal übersendet wird. Darüber hinaus ist der Mikrorechner 10 mit einer Spracherkennungseinrichtung 16 verbunden.

Die Einrichtung arbeitet wie folgt:

Bei Betätigung eines Türschlosses wird dem Mikrocomputers 10 über eine Leitung 14 mitgeteilt, dass beabsichtigt wird, das Kraftfahrzeug zu öffnen. Dieses sendet über eine Antenne 17, welche jeweils einen Eingangsverstärker 18 und einen Ausgangsverstärker 19 aufweist ein Anforderungssignal an den tragbaren Sender 1 auf.

Der tragbare Sender 1 reagiert auf dieses Anforderungssignal durch Aussendung einer codierten Information. Diese codierte Information wird durch die Antenne 17 empfangen und im Mikrorechner 10 des Empfängers 2 ausgewertet.

Hat der berechtigte Fahrer so Zugang zum Kraftfahrzeug erlangt, wird er den Zündschlüssel einführen, um so die Klemme 15 des Kraftfahrzeuges einzuschalten. Ist dies erfolgt, wird er von der als Freisprecheinrichtung ausgebildeten Spracherkennungseinrichtung 16 aufgefordert, sein Codewort zu nennen. Die Spracherkennungseinrichtung 16 prüft dieses Sprachcodewort mit einem in ihm gespeicherten Sprachcodewort und übermittelt bei Übereinstimmung dieser beiden Sprachcodewörter ein Signal an den Empfänger 2, welcher Klemme freischaltet, d. h. der Anlasser kann betätigt werden. Das Fahrzeug ist somit betriebsbereit.

Aufgrund dieser erfindungsgemäßen Vorrichtung wird ein Sicherheitssystem eingeführt, das nahezu die gleiche Sicherheit gewährleistet wie mit einem Fingerabdruck.

## Patentansprüche

1. System zur Aktivierung und/oder Deaktivierung einer Sicherheitseinrichtung, insbesondere einer Diebstahlsicherungseinrichtung eines Kraftfahrzeuges, bei welchem zwischen einem tragbaren Sender und einem Empfänger eine codierte Information drahtlos übertragen wird, wobei der Empfänger die empfangene Information mit einer vorgegebenen codierten Information vergleicht und bei Übereinstimmung dieser Informationen ein Ansteuersignal an die Sicherheitseinrichtung abgibt, **dadurch gekennzeichnet, dass** der Empfänger (2) mit einer Spracherkennungseinrichtung (16) verbunden ist, die eine eingegebene Sprachcodierung mit einer vorgegebenen Sprachcodierung vergleicht und bei Übereinstimmung ein Freigabesignal an den Empfänger (2) sendet, welcher dann das Ansteuersignal an die Sicherheitseinrichtung ausgibt.

2. System nach Anspruch 1, **dadurch gekennzeichnet, dass** die Spracherkennungseinrichtung (16) nach Betätigung eines Bedienelementes des Kraftfahrzeuges eine Aufforderung zur Eingabe der Sprachcodierung ausgibt.

3. System nach Anspruch 2 **dadurch gekennzeichnet, dass** die Aufforderung zur Eingabe der Sprachcodierung nach Betätigung eines Startmechanismus und/oder Einführen eines Zündschlüssels in das Zündschloss ausgegeben wird.

4. System nach Anspruch 1 oder 2, **dadurch gekennzeichnet, dass** die Spracherkennungseinrichtung (16) eine an sich im Fahrzeug vorhandene sprachgesteuerte Freisprecheinrichtung ist.

5. System nach Anspruch 1, **dadurch gekennzeichnet, dass** die Spracherkennungseinrichtung (16) für jeden berechtigten Nutzer eine vorgegebene Sprachcodierung speichert.
